# EUROPEAN PATENT APPLICATION

(11) **EP 4 656 889 A1**
(43) Date of publication of application: **03.12.2025**
(21) Application number: 23918275.1
(22) Date of filing: 23.01.2023
(51) Int. Cl.: F15B 15/28

(54) **POSITION DETECTION SWITCH**

(71) Applicant: SMC Corporation, Tokyo 104-0031 (JP)
(72) Inventor: SAITO Makoto, Tsukubamirai-shi, Ibaraki 300-2493 (JP); UCHIYAMA Hideki, Tsukubamirai-shi, Ibaraki 300-2493 (JP)
(74) Representative: Keil & Schaafhausen Patentanwälte PartGmbB
(86) International application number: PCT/JP2023/001819
(87) International publication number: WO 2024/157302

(57) **Abstract**

A first sensor (28) and a second sensor (30), of this position detection switch (25) that detects the magnetic field of a magnet (22) attached to a piston (18), are magnetic sensors that sense only the magnetic field in a single axis direction, distinguish between forward and reverse directions, and output the results. The present invention comprises a cylinder magnetic field discrimination part (36) that compares the movement direction in an output (V1) of the first sensor and the movement direction in an output (V2) of the second sensor.

## Description

### TECHNICAL FIELD

The present invention relates to a position detection switch, and more particularly, to a position detection switch that detects the position of a piston of a fluid pressure cylinder.

### BACKGROUND ART

Conventionally, a position detection switch is known which detects a position of a piston by mounting a magnet (permanent magnet) on the piston, and providing, on a cylinder tube, a magnetic sensor that detects a magnetic field of the magnet.

In the case that such a position detection switch is used in an environment in which an external magnetic field is present, there is a concern that the position of the piston may be erroneously detected due to an influence of the external magnetic field. There is also known a position detection switch that prevents erroneous detection of the position of the piston even when an external magnetic field acts thereon.

For example, in JP 2021-071116 A, a position detection switch is disclosed in which two MR sensors, each having a pair of magnetoresistance element patterns that react in two mutually orthogonal directions, are arranged at a predetermined interval. Specifically, a first MR sensor and a second MR sensor are disposed in a manner so that, when the first MR sensor receives a maximal magnetic field component of the magnet in a direction parallel to the axial direction of the piston, the second MR sensor receives a maximal magnetic field component of the magnet in a direction parallel to the radial direction of the piston.

### SUMMARY OF THE INVENTION

However, with the position detection switch of JP 2021-071116 A, a sensor is required that senses magnetic fields in two axial directions that are orthogonal to each other. Further, there is a long awaited need for a position detection switch that is less susceptible to the influence of an external magnetic field.

The present invention has the object of solving the aforementioned problem.

A position detection switch according to the present invention comprises a first sensor and a second sensor each configured to detect a magnetic field of a magnet that is mounted on a piston, wherein the first sensor and the second sensor are magnetic sensors that sense a magnetic field in only one axial direction and output the magnetic field while distinguishing between positive and negative directions of the magnetic field, the magnet is magnetized in a sliding direction of the piston, and the first sensor and the second sensor are disposed in a manner so as to sense a magnetic flux perpendicular to the sliding direction of the piston. The position detection switch comprises a cylinder magnetic field discrimination unit configured to compare a movement direction of an output of the first sensor with a movement direction of an output of the second sensor.

According to the above-described position detection switch, using the first sensor and the second sensor that sense the magnetic field in only one axial direction, the cylinder magnetic field can be distinguished from an external magnetic field such as a welding magnetic field or the like. Further, compared with a case in which a sensor that detects magnetic fields in two axial directions is used, the position detection switch is less susceptible to the influence of an external magnetic field.

### BRIEF DESCRIPTION OF DRAWINGS

[FIG. 1] FIG. 1 is a schematic diagram of a fluid pressure cylinder equipped with a position detection switch according to a first embodiment of the present invention;
[FIG. 2] FIG. 2 is a diagram showing outputs of sensors of the position detection switch shown in FIG. 1, according to a position of a piston;
[FIG. 3] FIG. 3 is a block diagram of the position detection switch shown in FIG. 1;
[FIG. 4] FIG. 4 is a diagram for describing a state in which a welding magnetic field acts on the position detection switch shown in FIG. 1;
[FIG. 5] FIG. 5 is a diagram showing a manner in which the outputs of the sensors change, when the welding magnetic field acts on the position detection switch shown in FIG. 1;
[FIG. 6] FIG. 6 is a schematic diagram of a fluid pressure cylinder equipped with a position detection switch according to a second embodiment of the present invention;
[FIG. 7] FIG. 7 is a diagram showing outputs of the sensors of the position detection switch shown in FIG. 6, according to the position of the piston;
[FIG. 8] FIG. 8 is a block diagram of the position detection switch shown in FIG. 6;
[FIG. 9] FIG. 9 is a diagram showing outputs of the sensors of a position detection switch according to a third embodiment of the present invention, according to the position of the piston; and
[FIG. 10] FIG. 10 is a block diagram of the position detection switch according to the third embodiment of the present invention.

### DETAILED DESCRIPTION OF THE INVENTION

In the following description, when terms relating to up, down, left, and right directions are used, such terms refer to the directions shown in the drawings for the sake of convenience, however, the actual arrangement of the constituent members and the like are not limited thereby.

### (First Embodiment)

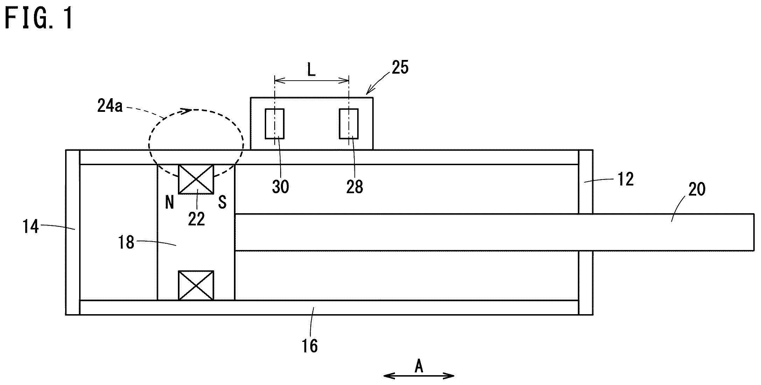

A description will be given with reference to FIG. 1 to FIG. 5 concerning a fluid pressure cylinder equipped with a position detection switch 25 according to a first embodiment of the present invention. The fluid pressure cylinder equipped with the position detection switch 25 is used, for example, in order to clamp a workpiece W that serves as an object to be welded.

As shown in FIG. 1, the fluid pressure cylinder equipped with the position detection switch 25 includes a cylinder tube 16, a piston 18 that is slidably disposed within the cylinder tube 16, and a piston rod 20 connected to the piston 18. A right end of the cylinder tube 16 is sealed by a rod cover 12, and a left end of the cylinder tube 16 is sealed by a head cover 14. In the following description, the sliding direction (the left-right direction) of the piston 18 may be referred to as an A direction.

An annular shaped magnet (permanent magnet) 22 is mounted on an outer circumferential portion of the piston 18. The magnet 22 is magnetized in the A direction, with a left end surface of the magnet 22 being an N-pole, and a right end surface thereof being an S-pole. A magnetic field (magnetic flux) 24a is formed around the magnet 22, which emerges from the left end surface of the magnet 22, passes through a radially outer side of the magnet 22, and returns to the right end surface of the magnet 22. The magnetic field generated by the magnet 22 is referred to as a "cylinder magnetic field".

The position detection switch 25 includes a first sensor 28 and a second sensor 30, and is mounted on an outer side of the cylinder tube 16. The first sensor 28 and the second sensor 30 are constituted from magnetic sensors such as TMR sensors or Hall elements or the like, and serve to sense the magnetic field in only one axial direction, and output the magnetic field while distinguishing between positive and negative directions thereof. The first sensor 28 and the second sensor 30 are disposed at a predetermined distance L in the A direction. As will be discussed later, the predetermined distance L is set in a manner so that an output V1 of the first sensor 28 and an output V2 of the second sensor 30 can simultaneously take on a maximum value Vmax.

The first sensor 28, which is disposed closer to the rod cover 12, outputs a positive value with respect to a downward magnetic flux, and outputs a negative value with respect to an upward magnetic flux. The second sensor 30, which is disposed closer to the head cover 14, outputs a positive value with respect to an upward magnetic flux, and outputs a negative value with respect to a downward magnetic flux. The first sensor 28 and the second sensor 30 are disposed in a manner so as to have output characteristics in opposite directions to each other.

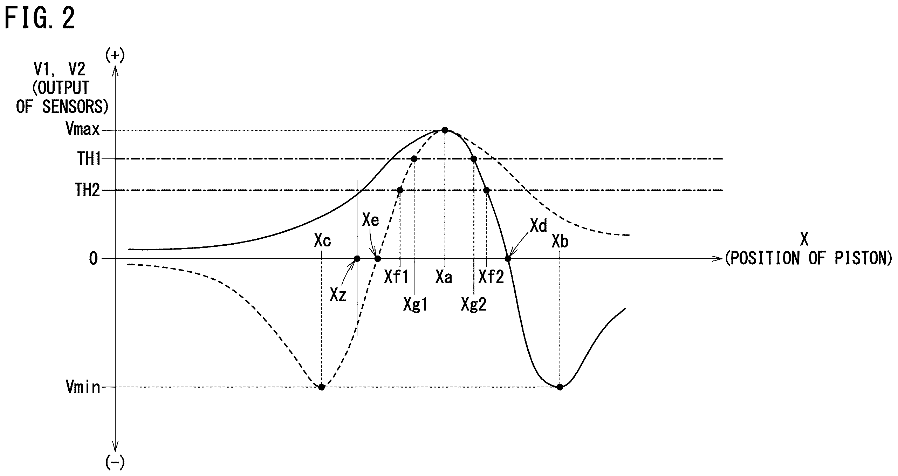

FIG. 2 is a diagram showing the output V1 of the first sensor 28 and the output V2 of the second sensor 30 according to a position X of the piston 18. The horizontal axis indicates the position X of the piston 18, and the vertical axis indicates the outputs V1 and V2 of the sensors. A change in the output of the first sensor 28 is shown by a solid line, and a change in the output of the second sensor 30 is shown by a dashed line. When a center of the magnet 22 is positioned exactly halfway between the first sensor 28 and the second sensor 30 in the A direction, the position X of the piston 18 is Xa.

The output V1 of the first sensor 28 becomes a maximum value Vmax when X = Xa, and becomes a minimum value Vmin when X = Xb (Xa < Xb). The output V1 of the first sensor 28 is zero when X = Xd (Xa < Xd < Xb), takes on a positive value in a region in which X < Xd, and takes on a negative value in a region in which X > Xd.

The output V2 of the second sensor 30 becomes a maximum value Vmax when X = Xa, and becomes a minimum value Vmin when X = Xc (Xc < Xa). The output V2 of the second sensor 30 is zero when X = Xe (Xc < Xe < Xa), takes on a negative value in a region in which X < Xe, and takes on a positive value in a region in which X > Xe.

A positive value that is smaller than the maximum value Vmax is set as a first threshold value TH1, and a positive value that is smaller than the first threshold value TH1 is set as a second threshold value TH2. In a region in which Xf1 < X < Xf2, the output V1 of the first sensor 28 and the output V2 of the second sensor 30 are both greater than the second threshold value TH2. In a region in which Xg1 < X < Xg2, the output V1 of the first sensor 28 and the output V2 of the second sensor 30 are both greater than the first threshold value TH1.

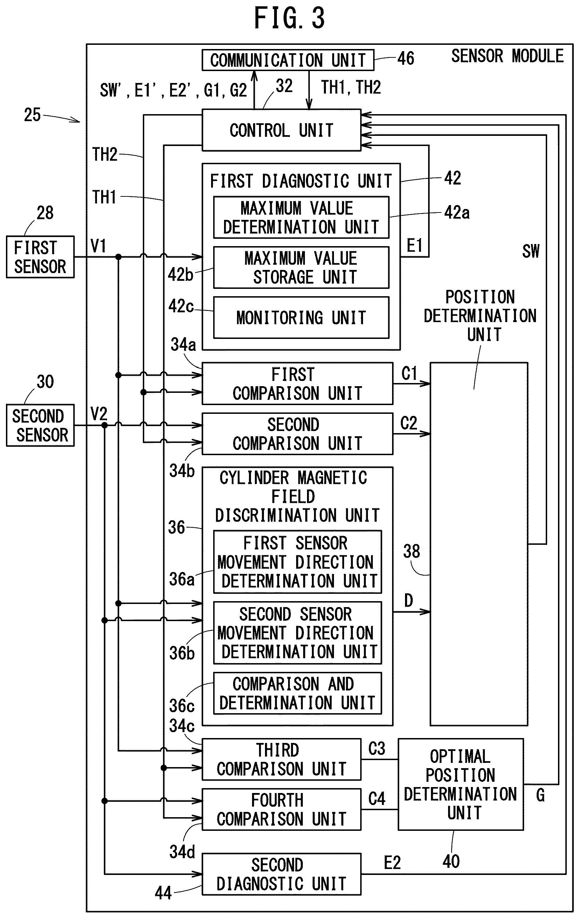

As shown in FIG. 3, the position detection switch 25 is equipped with a control unit 32, first to fourth comparison units 34a to 34d, a cylinder magnetic field discrimination unit 36, a position determination unit 38, an optimal position determination unit 40, a first diagnostic unit 42, a second diagnostic unit 44, and a communication unit 46. The first threshold value TH1 and the second threshold value TH2 are retained in the control unit 32.

The output V1 from the first sensor 28 and the second threshold value TH2 from the control unit 32 are input to the first comparison unit 34a. The first comparison unit 34a compares the output V1 of the first sensor 28 with the second threshold value TH2, and outputs a comparison signal C1. When the output V1 of the first sensor 28 is greater than or equal to the second threshold value TH2, the comparison signal C1 is 1, and when the output V1 of the first sensor 28 is less than the second threshold value TH2, the comparison signal C1 is 0.

The output V2 from the second sensor 30 and the second threshold value TH2 from the control unit 32 are input to the second comparison unit 34b. The second comparison unit 34b compares the output V2 of the second sensor 30 with the second threshold value TH2, and outputs a comparison signal C2. When the output V2 of the second sensor 30 is greater than or equal to the second threshold value TH2, the comparison signal C2 is 1, and when the output V2 of the second sensor 30 is less than the second threshold value TH2, the comparison signal C2 is 0.

The output V1 from the first sensor 28 and the first threshold value TH1 from the control unit 32 are input to the third comparison unit 34c. The third comparison unit 34c compares the output V1 of the first sensor 28 with the first threshold value TH1, and outputs a comparison signal C3. When the output V1 of the first sensor 28 is greater than or equal to the first threshold value TH1, the comparison signal C3 is 1, and when the output V1 of the first sensor 28 is less than the first threshold value TH1, the comparison signal C3 is 0.

The output V2 from the second sensor 30 and the first threshold value TH1 from the control unit 32 are input to the fourth comparison unit 34d. The fourth comparison unit 34d compares the output V2 of the second sensor 30 with the first threshold value TH1, and outputs a comparison signal C4. When the output V2 of the second sensor 30 is greater than or equal to the first threshold value TH1, the comparison signal C4 is 1, and when the output V2 of the second sensor 30 is less than the first threshold value TH1, the comparison signal C4 is 0.

The cylinder magnetic field discrimination unit 36 is provided in order so that a change in the output V1 of the first sensor 28 and the output V2 of the second sensor 30 due to an external magnetic field such as a welding magnetic field or the like does not become the basis for determining the position of the piston 18. Stated otherwise, the cylinder magnetic field discrimination unit 36 distinguishes between the cylinder magnetic field and the external magnetic field such as the welding magnetic field or the like.

The cylinder magnetic field discrimination unit 36 includes a first sensor movement direction determination unit 36a, a second sensor movement direction determination unit 36b, and a comparison and determination unit 36c. The output V1 from the first sensor 28 is input to the first sensor movement direction determination unit 36a. The first sensor movement direction determination unit 36a retains a previous output V1, and compares a newly input output V1 with the previous output V1, and thereby determines whether the output V1 of the first sensor 28 has increased or decreased. The first sensor movement direction determination unit 36a transmits the determination result to the comparison and determination unit 36c.

The output V2 from the second sensor 30 is input to the second sensor movement direction determination unit 36b. The second sensor movement direction determination unit 36b retains a previous output V2, and compares a newly input output V2 with the previous output V2, and thereby determines whether the output V2 of the second sensor 30 has increased or decreased. The second sensor movement direction determination unit 36b transmits the determination result to the comparison and determination unit 36c.

The comparison and determination unit 36c compares the movement direction (an increase or decrease direction) of the output V1 of the first sensor 28 with the movement direction (an increase or decrease direction) of the output V2 of the second sensor 30, and outputs a determination signal D. When the movement direction of the output V2 of the second sensor 30 is the same as the movement direction of the output V1 of the first sensor 28, the determination signal D is 1. When the movement direction of the output V2 of the second sensor 30 is not the same as the movement direction of the output V1 of the first sensor 28, the determination signal D is 0.

The position determination unit 38 has a role of determining whether or not the piston 18 is located within a predetermined range (Xf1 ≤ X ≤ Xf2) that includes an optimal position (Xg1 ≤ X ≤ Xg2). The comparison signal C1, the comparison signal C2, and the determination signal D are input to the position determination unit 38. Based on these signals, the position determination unit 38 outputs a switching signal SW to the control unit 32. The initial value of the switching signal SW is set to OFF. When the comparison signal C1, the comparison signal C2, and the determination signal D all have become 1, the position determination unit 38 switches the switching signal SW from OFF to ON. When the determination signal D is 1, and further, at least one of the comparison signal C1 or the comparison signal C2 has become 0, the position determination unit 38 switches the switching signal SW from ON to OFF. When the inequality Xf1 ≤ X ≤ Xf2 is satisfied, the switching signal SW is ON.

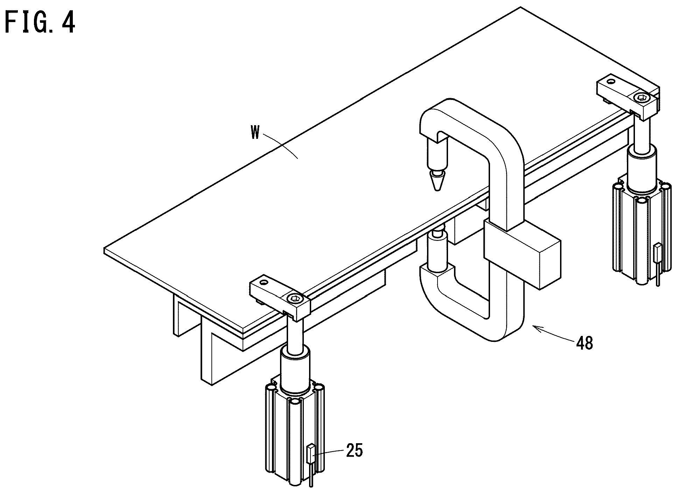

As shown in FIG. 4, a welding machine 48 is disposed in close proximity to the fluid pressure cylinder that clamps the workpiece W. When a welding current is applied by the welding machine 48, the welding magnetic field extends into a surrounding space that includes the fluid pressure cylinder. Therefore, a magnetic flux of the same magnitude and in the same direction acts on the first sensor 28 and the second sensor 30 of the position detection switch 25. Such a magnetic flux includes a vertical component, and normally, is larger than the magnetic flux of the magnet 22.

Since the first sensor 28 and the second sensor 30 are disposed in a manner so as to have output characteristics in opposite directions to each other, the movement direction of the output V2 of the second sensor 30 due to the welding magnetic field is opposite to the movement direction of the output V1 of the first sensor 28 due to the welding magnetic field. Accordingly, the determination signal D never becomes 1, and a change does not occur in the switching signal SW. More specifically, during a period in which the welding magnetic field is acting thereon, the switching signal SW does not change.

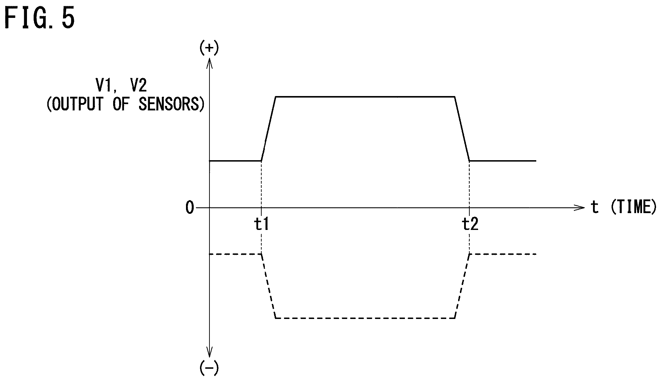

FIG. 5 shows a manner in which the output V1 of the first sensor 28 and the output V2 of the second sensor 30 change, when the welding magnetic field acts thereon in a state in which the piston 18 is stopped at a position Xz shown in FIG. 2. The horizontal axis indicates an elapsed time period (time) t, and the vertical axis indicates the outputs V1 and V2 of the sensors. A change in the output of the first sensor 28 is shown by a solid line, and a change in the output of the second sensor 30 is shown by a dashed line. When the welding magnetic field is generated at time t1, the output V1 of the first sensor 28 abruptly increases, and the output V2 of the second sensor 30 abruptly decreases. When the welding magnetic field vanishes at time t2, the output V1 of the first sensor 28 abruptly decreases and returns to its original value, and the output V2 of the second sensor 30 abruptly increases and returns to its original value.

The optimal position determination unit 40 has a role of determining whether or not the piston 18 is in the optimal position (Xg1 ≤ X ≤ Xg2). The comparison signal C3 and the comparison signal C4 are input to the optimal position determination unit 40, and the optimal position determination unit 40 outputs the determination result as an optimal position signal G to the control unit 32. When both the comparison signal C3 and the comparison signal C4 are 1, the optimal position signal G is 1. When at least one of the comparison signal C3 or the comparison signal C4 is 0, the optimal position signal G is 0. When the piston 18 is determined to be in the optimal position, the optimal position signal G is 1.

The control unit 32 is capable of communicating bidirectionally with the exterior via the communication unit 46. In response to the switching signal SW having been received from the position determination unit 38, the control unit 32 outputs, to the exterior via the communication unit 46, a signal SW' that is used to control an external device that operates in association with the position detection switch 25.

Based on the switching signal SW and the optimal position signal G, the control unit 32 outputs a signal for controlling a non-illustrated operation indicator light. When the switching signal SW is ON, and further, the optimal position signal G is 1, a command signal G1 to illuminate the operation indicator light to be green is output. Therefore, when the inequality Xg1 ≤ X ≤ Xg2 is satisfied, the green operation indicator light is illuminated. When the switching signal SW is ON, and further, the optimal position signal G is 0, a command signal G2 to illuminate the operation indicator light to be red is output. Therefore, when the inequality Xf1 ≤ X < Xg1 or the inequality Xg2 < X ≤ Xf2 is satisfied, the red operation indicator light is illuminated.

In the case that the green operation indicator light is illuminated, the operator can recognize that the piston 18 is in the optimal position. In the case that the red operation indicator light is illuminated, or alternatively, in the case that the operation indicator light is not illuminated, the operator can recognize that the piston 18 is shifted from the optimal position. In the case that the number of the clamped workpieces W is not a specified number, or alternatively, in the case that the workpieces W that should be clamped are not clamped, the operation indicator light is not illuminated to be green. In accordance with this feature, the operator is capable of recognizing that the process is not being carried out in an appropriate manner.

A change in the settings of the first threshold value TH1 and the second threshold value TH2 for the position detection switch 25 can be carried out from the exterior. Upon receiving the data in relation to a change in the setting of the first threshold value TH1 via the communication unit 46, the control unit 32 outputs a new first threshold value TH1 to the third comparison unit 34c and the fourth comparison unit 34d. Upon receiving the data in relation to a change in the setting of the second threshold value TH2 via the communication unit 46, the control unit 32 outputs a new second threshold value TH2 to the first comparison unit 34a and the second comparison unit 34b.

The magnetic force of the magnet 22 decreases (undergoes demagnetization) accompanying the passage of time. In particular, if the magnet 22 is repeatedly exposed to the welding magnetic field for a prolonged time, the magnet 22 is likely to become demagnetized. Further, the magnetic force of the magnet 22 decreases when placed in a high temperature environment over a prolonged period of time. When such an event occurs, there is a possibility that the maximum value Vmax of the output V1 of the first sensor 28 or the maximum value Vmax of the output V2 of the second sensor 30 may decrease to such a degree that the maximum value Vmax does not exceed the first threshold value TH1.

Thus, the first diagnostic unit 42 and the second diagnostic unit 44 are provided for the purpose of monitoring whether or not the maximum value Vmax of the output V1 of the first sensor 28 and the maximum value Vmax of the output V2 of the second sensor 30 have decreased by a predetermined amount or more due to changes over time or other reasons. The output V1 of the first sensor 28 is input to the first diagnostic unit 42, and the output V2 of the second sensor 30 is input to the second diagnostic unit 44. Hereinafter, the processing content in the first diagnostic unit 42 will be described, however, such content is the same as the processing content in the second diagnostic unit 44.

The first diagnostic unit 42 includes a maximum value determination unit 42a, a maximum value storage unit 42b, and a monitoring unit 42c. Each time that the output V1 of the first sensor 28 transitions from an increasing state to a decreasing state, the maximum value determination unit 42a transmits, to the maximum value storage unit 42b, the output at that time (the output V1 immediately prior to transitioning to the decreasing state) as the maximum value Vmax. The maximum value storage unit 42b stores, in chronological order, maximum value Vmax data received from the maximum value determination unit 42a.

From among a large number of the maximum value Vmax data stored in the maximum value storage unit 42b, the monitoring unit 42c periodically calculates the average value of a most recent predetermined number of data, and compares the calculated value with the average value of an initial predetermined number of data. In the case it is determined that the average value of the most recent predetermined number of data is smaller, by a predetermined value or more, than the average value of the initial predetermined number of data, a caution signal E1 is output to the control unit 32.

Upon receiving the caution signal E1 from the monitoring unit 42c of the first diagnostic unit 42, the control unit 32 outputs a caution signal E1' to the exterior via the communication unit 46, in order to issue a notification that there is a high probability that demagnetization of the magnet 22 has occurred. Consequently, it is possible to prompt the operator to perform maintenance such as replacement of component parts, or to prompt the operator to adjust the first threshold value TH1.

In the present embodiment, the first diagnostic unit 42 monitors the maximum value Vmax of the output V1 of the first sensor 28, and the second diagnostic unit 44 monitors the maximum value Vmax of the output V2 of the second sensor 30. However, the maximum value Vmax of the output V1 and the maximum value Vmax of the output V2 may be monitored comprehensively by a common diagnostic unit. In the case that both the maximum value Vmax of the output V1 and the maximum value Vmax of the output V2 have decreased by a predetermined amount or more, it is highly probable that demagnetization of the magnet 22 is the cause. In the case that only one of the maximum value Vmax of the output V1 or the maximum value Vmax of the output V2 has decreased by a predetermined amount or more, it is highly probable that a decrease in the sensitivity of the sensor is the cause. It is efficient if a common diagnostic unit distinguishes between such events and outputs the caution signal.

In accordance with the position detection switch 25 according to the present embodiment, the cylinder magnetic field can be distinguished from an external magnetic field such as a welding magnetic field or the like by using the first sensor 28 and the second sensor 30 that sense the magnetic field in only one axial direction. In the description of the present embodiment, although the welding magnetic field is assumed as the external magnetic field, as long as the external magnetic field acts in the same direction on the first sensor 28 and the second sensor 30, the cylinder magnetic field and the external magnetic field can be distinguished.

### (Second Embodiment)

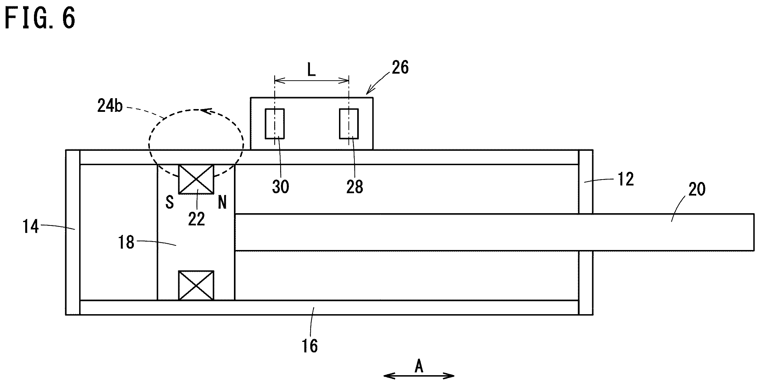

Next, a description will be given with reference to FIG. 6 to FIG. 8 concerning a position detection switch 26 according to a second embodiment of the present invention. Moreover, in the present embodiment, constituent elements thereof, which are the same as or equivalent to those of the above-described fluid pressure cylinder equipped with the position detection switch 25 according to the first embodiment, are denoted by the same reference numerals, and detailed description of such features is omitted.

As shown in FIG. 6, the annular shaped magnet 22 is mounted on an outer circumferential portion of the piston 18. The magnet 22 is magnetized in the A direction, with a left end surface of the magnet 22 being an S-pole, and a right end surface thereof being an N-pole. A magnetic flux 24b is formed around the magnet 22, which emerges from the right end surface of the magnet 22, passes through a radially outer side of the magnet 22, and returns to the left end surface of the magnet 22.

The first sensor 28, which is disposed closer to the rod cover 12, outputs a positive value with respect to a downward magnetic flux, and outputs a negative value with respect to an upward magnetic flux. The second sensor 30, which is disposed closer to the head cover 14, outputs a positive value with respect to an upward magnetic flux, and outputs a negative value with respect to a downward magnetic flux. The first sensor 28 and the second sensor 30 are disposed in a manner so as to have output characteristics in opposite directions to each other.

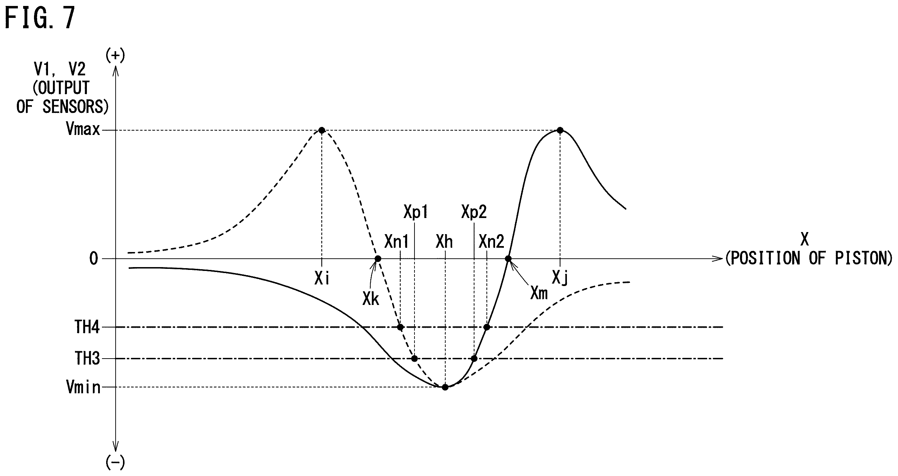

FIG. 7 is a diagram showing the output V1 of the first sensor 28, and the output V2 of the second sensor 30 according to the position X of the piston 18. A change in the output of the first sensor 28 is shown by a solid line, and a change in the output of the second sensor 30 is shown by a dashed line. When a center of the magnet 22 is positioned exactly halfway between the first sensor 28 and the second sensor 30 in the A direction, the position X of the piston 18 is Xh.

The output V1 of the first sensor 28 becomes a minimum value Vmin when X = Xh, and becomes a maximum value Vmax when X = Xj (Xh < Xj). The output V1 of the first sensor 28 is zero when X = Xm (Xh < Xm < Xj), takes on a negative value in a region in which X < Xm, and takes on a positive value in a region in which X > Xm.

The output V2 of the second sensor 30 becomes a minimum value Vmin when X = Xh, and becomes a maximum value Vmax when X = Xi (Xi < Xh). The output V2 of the second sensor 30 is zero when X = Xk (Xi < Xk < Xh), takes on a positive value in a region in which X < Xk, and takes on a negative value in a region in which X > Xk.

A negative value that is larger than the minimum value Vmin is set as a third threshold value TH3, and a negative value that is larger than the third threshold value TH3 is set as a fourth threshold value TH4. In a region in which Xn1 < X < Xn2, the output V1 of the first sensor 28 and the output V2 of the second sensor 30 are both less than the fourth threshold value TH4. In a region in which Xp1 < X < Xp2, the output V1 of the first sensor 28 and the output V2 of the second sensor 30 are both less than the third threshold value TH3. The third threshold value TH3 and the fourth threshold value TH4 are retained in the control unit 32.

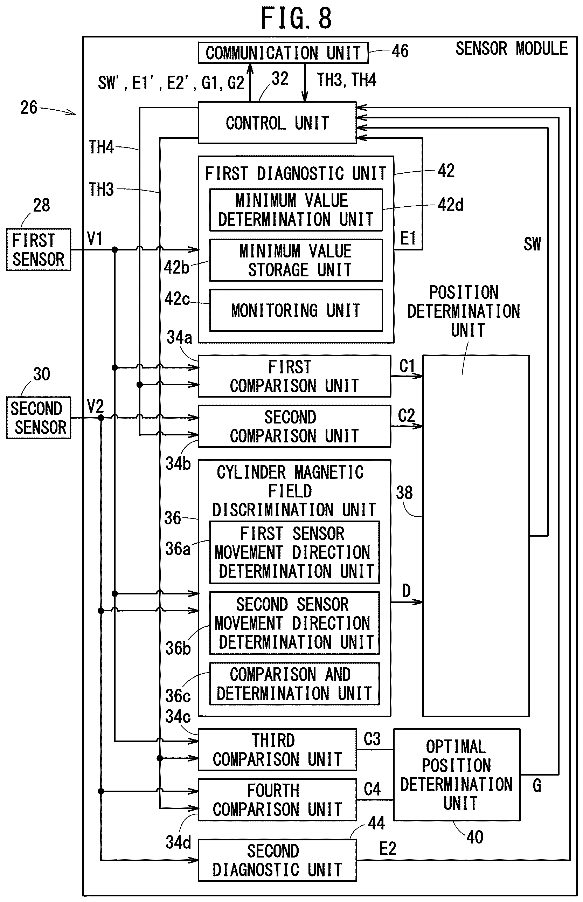

As shown in FIG. 8, the output V1 from the first sensor 28 and the fourth threshold value TH4 from the control unit 32 are input to the first comparison unit 34a. The first comparison unit 34a compares the output V1 of the first sensor 28 with the fourth threshold value TH4, and outputs a comparison signal C1. When the output V1 of the first sensor 28 is less than or equal to the fourth threshold value TH4, the comparison signal C1 is 1, and when the output V1 of the first sensor 28 is greater than the fourth threshold value TH4, the comparison signal C1 is 0.

The output V2 from the second sensor 30 and the fourth threshold value TH4 from the control unit 32 are input to the second comparison unit 34b. The second comparison unit 34b compares the output V2 of the second sensor 30 with the fourth threshold value TH4, and outputs a comparison signal C2. When the output V2 of the second sensor 30 is less than or equal to the fourth threshold value TH4, the comparison signal C2 is 1, and when the output V2 of the second sensor 30 is greater than the fourth threshold value TH4, the comparison signal C2 is 0.

The output V1 from the first sensor 28 and the third threshold value TH3 from the control unit 32 are input to the third comparison unit 34c. The third comparison unit 34c compares the output V1 of the first sensor 28 with the third threshold value TH3, and outputs a comparison signal C3. When the output V1 of the first sensor 28 is less than or equal to the third threshold value TH3, the comparison signal C3 is 1, and when the output V1 of the first sensor 28 is greater than the third threshold value TH3, the comparison signal C3 is 0.

The output V2 from the second sensor 30 and the third threshold value TH3 from the control unit 32 are input to the fourth comparison unit 34d. The fourth comparison unit 34d compares the output V2 of the second sensor 30 with the third threshold value TH3, and outputs a comparison signal C4. When the output V2 of the second sensor 30 is less than or equal to the third threshold value TH3, the comparison signal C4 is 1, and when the output V2 of the second sensor 30 is greater than the third threshold value TH3, the comparison signal C4 is 0.

The first sensor movement direction determination unit 36a of the cylinder magnetic field discrimination unit 36 determines whether the output V1 of the first sensor 28 has increased or decreased, and transmits the result thereof to the comparison and determination unit 36c. The second sensor movement direction determination unit 36b of the cylinder magnetic field discrimination unit 36 determines whether the output V2 of the second sensor 30 has increased or decreased, and transmits the result thereof to the comparison and determination unit 36c.

The comparison and determination unit 36c compares the movement direction of the output V1 of the first sensor 28 with the movement direction of the output V2 of the second sensor 30, and outputs a determination signal D. When the movement direction of the output V2 of the second sensor 30 is the same as the movement direction of the output V1 of the first sensor 28, the determination signal D is 1. When the movement direction of the output V2 of the second sensor 30 is not the same as the movement direction of the output V1 of the first sensor 28, the determination signal D is 0.

The position determination unit 38 has a role of determining whether or not the piston 18 is located within a predetermined range (Xn1 ≤ X ≤ Xn2) that includes an optimal position (Xp1 ≤ X ≤ Xp2). The comparison signal C1, the comparison signal C2, and the determination signal D are input to the position determination unit 38. Based on these signals, the position determination unit 38 outputs a switching signal SW to the control unit 32. When the comparison signal C1, the comparison signal C2, and the determination signal D all have become 1, the position determination unit 38 switches the switching signal SW from OFF to ON. When the determination signal D is 1, and further, at least one of the comparison signal C1 or the comparison signal C2 has become 0, the position determination unit 38 switches the switching signal SW from ON to OFF. When the inequality Xn1 ≤ X ≤ Xn2 is satisfied, the switching signal SW is ON.

When a welding magnetic field is generated, a magnetic flux of the same magnitude and in the same direction acts on the first sensor 28 and the second sensor 30. Since the first sensor 28 and the second sensor 30 are disposed in a manner so as to have output characteristics in opposite directions to each other, the movement direction of the output V2 of the second sensor 30 due to the welding magnetic field is opposite to the movement direction of the output V1 of the first sensor 28 due to the welding magnetic field. Accordingly, the determination signal D never becomes 1, and a change does not occur in the switching signal SW. More specifically, during a period in which the welding magnetic field is being generated, the switching signal SW does not change.

The optimal position determination unit 40 has a role of determining whether or not the piston 18 is in the optimal position (Xp1 ≤ X ≤ Xp2). The comparison signal C3 and the comparison signal C4 are input to the optimal position determination unit 40, and the optimal position determination unit 40 outputs the determination result as an optimal position signal G to the control unit 32. When both the comparison signal C3 and the comparison signal C4 are 1, the optimal position signal G is 1, and when at least one of the comparison signal C3 or the comparison signal C4 is 0, the optimal position signal G is 0. When the piston 18 is determined to be in the optimal position, the optimal position signal G is 1.

In response to the switching signal SW having been received from the position determination unit 38, the control unit 32 outputs a signal SW' that is used to control an external device that operates in association with the position detection switch 26. Based on the switching signal SW and the optimal position signal G, the control unit 32 outputs a signal for controlling a non-illustrated operation indicator light. When the switching signal SW is ON, and further, the optimal position signal G is 1, a command signal G1 to illuminate the operation indicator light to be green is output. Therefore, when the inequality Xp1 ≤ X ≤ Xp2 is satisfied, the green operation indicator light is illuminated. When the switching signal SW is ON, and further, the optimal position signal G is 0, a command signal G2 to illuminate the operation indicator light to be red is output. Therefore, when the inequality Xn1 ≤ X < Xp1 or the inequality Xp2 < X ≤ Xn2 is satisfied, the red operation indicator light is illuminated.

The magnet 22 undergoes demagnetization accompanying the passage of time, and further, undergoes demagnetization when placed in a high temperature environment over a prolonged period of time. When such an event occurs, there is a possibility that the minimum value Vmin of the output V1 of the first sensor 28 or the minimum value Vmin of the output V2 of the second sensor 30 may increase to such a degree that the minimum value Vmin does not fall below the third threshold value TH3.

The first diagnostic unit 42 and the second diagnostic unit 44 are provided for the purpose of monitoring whether or not the minimum value Vmin of the output V1 of the first sensor 28 and the minimum value Vmin of the output V2 of the second sensor 30 have increased by a predetermined amount or more due to changes over time or other reasons. The output V1 of the first sensor 28 is input to the first diagnostic unit 42, and the output V2 of the second sensor 30 is input to the second diagnostic unit 44. Hereinafter, the processing content in the first diagnostic unit 42 will be described, however, such content is the same as the processing content in the second diagnostic unit 44.

The first diagnostic unit 42 includes a minimum value determination unit 42d, a minimum value storage unit 42e, and the monitoring unit 42c. Each time that the output V1 of the first sensor 28 transitions from a decreasing state to an increasing state, the minimum value determination unit 42d transmits the output at that time to the minimum value storage unit 42e as the minimum value Vmin. The minimum value storage unit 42e stores, in chronological order, minimum value Vmin data received from the minimum value determination unit 42d.

From among a large number of the minimum value Vmin data stored in the minimum value storage unit 42e, the monitoring unit 42c periodically calculates the average value of a most recent predetermined number of data, and compares the calculated value with the average value of an initial predetermined number of data. In the case it is determined that the average value of the most recent predetermined number of data is greater, by a predetermined value or more, than the average value of the initial predetermined number of data, a caution signal E1 is output to the control unit 32.

Upon receiving the caution signal E1 from the monitoring unit 42c of the first diagnostic unit 42, the control unit 32 outputs a caution signal E1' to the exterior via the communication unit 46, in order to issue a notification that there is a high probability that demagnetization of the magnet 22 has occurred. Consequently, it is possible to prompt the operator to perform maintenance such as replacement of component parts, or to prompt the operator to adjust the third threshold value TH3.

In accordance with the position detection switch 26 according to the present embodiment, the cylinder magnetic field can be distinguished from an external magnetic field such as a welding magnetic field or the like by using the first sensor 28 and the second sensor 30 that sense the magnetic field in only one axial direction.

### (Third Embodiment)

Next, a description will be given with reference to FIG. 1, FIG. 9, and FIG. 10 concerning a position detection switch 27 according to a third embodiment of the present invention. However, concerning FIG. 1, the reference numeral "25" is replaced by the reference numeral "27". Moreover, in the present embodiment, constituent elements thereof, which are the same as or equivalent to those of the above-described fluid pressure cylinder equipped with the position detection switch 25 according to the first embodiment, are denoted by the same reference numerals, and detailed description of such features is omitted.

The annular shaped magnet 22 is mounted on an outer circumferential portion of the piston 18. The magnet 22 is magnetized in the A direction, with a left end surface of the magnet 22 being an N-pole, and a right end surface thereof being an S-pole. A magnetic flux is formed around the magnet 22, which emerges from the left end surface of the magnet 22, passes through a radially outer side of the magnet 22, and returns to the right end surface of the magnet 22.

The first sensor 28, which is disposed closer to the rod cover 12, and the second sensor 30, which is disposed closer to the head cover 14, both output a positive value with respect to an upward magnetic flux, and a negative value with respect to a downward magnetic flux. The first sensor 28 and the second sensor 30 are disposed in a manner so as to have output characteristics in the same direction.

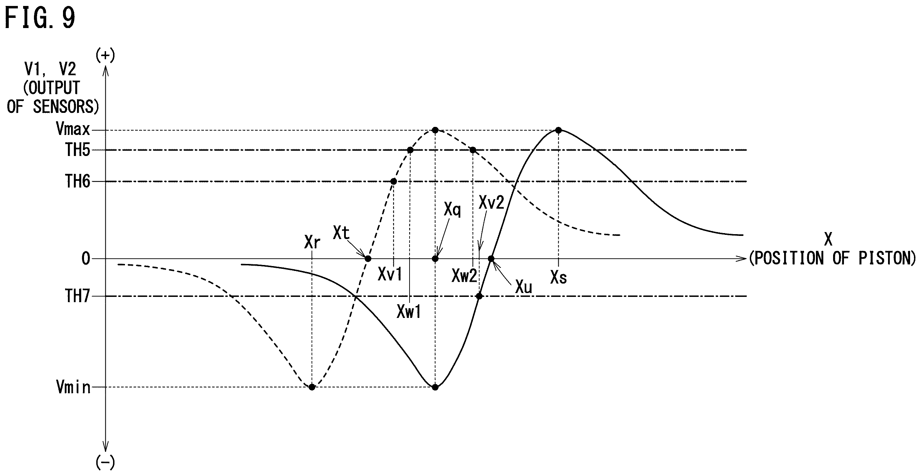

FIG. 9 is a diagram showing the output V1 of the first sensor 28 and the output V2 of the second sensor 30 according to the position X of the piston 18. A change in the output of the first sensor 28 is shown by a solid line, and a change in the output of the second sensor 30 is shown by a dashed line. When a center of the magnet 22 is positioned exactly halfway between the first sensor 28 and the second sensor 30 in the A direction, the position X of the piston 18 is Xq.

The output V1 of the first sensor 28 becomes a minimum value Vmin when X = Xq, and becomes a maximum value Vmax when X = Xs (Xq < Xs). The output V1 of the first sensor 28 is zero when X = Xu (Xq < Xu < Xs), takes on a negative value in a region in which X < Xu, and takes on a positive value in a region in which X > Xu.

The output V2 of the second sensor 30 becomes a maximum value Vmax when X = Xq, and becomes a minimum value Vmin when X = Xr (Xr < Xq). The output V2 of the second sensor 30 is zero when X = Xt (Xr < Xt < Xq), takes on a negative value in a region in which X < Xt, and takes on a positive value in a region in which X > Xt.

A positive value that is smaller than the maximum value Vmax is set as a fifth threshold value TH5, and a positive value that is smaller than the fifth threshold value TH5 is set as a sixth threshold value TH6. A negative value that is larger than the minimum value Vmin is set as a seventh threshold value TH7. In a region in which Xv1 < X < Xv2, the output V1 of the first sensor 28 is less than the threshold value TH7, and the output V2 of the second sensor 30 is greater than the threshold value TH6. In a region in which Xw1 < X < Xw2, the output V2 of the second sensor 30 is greater than the threshold value TH5. The fifth to seventh threshold values TH5 to TH7 are retained in the control unit 32.

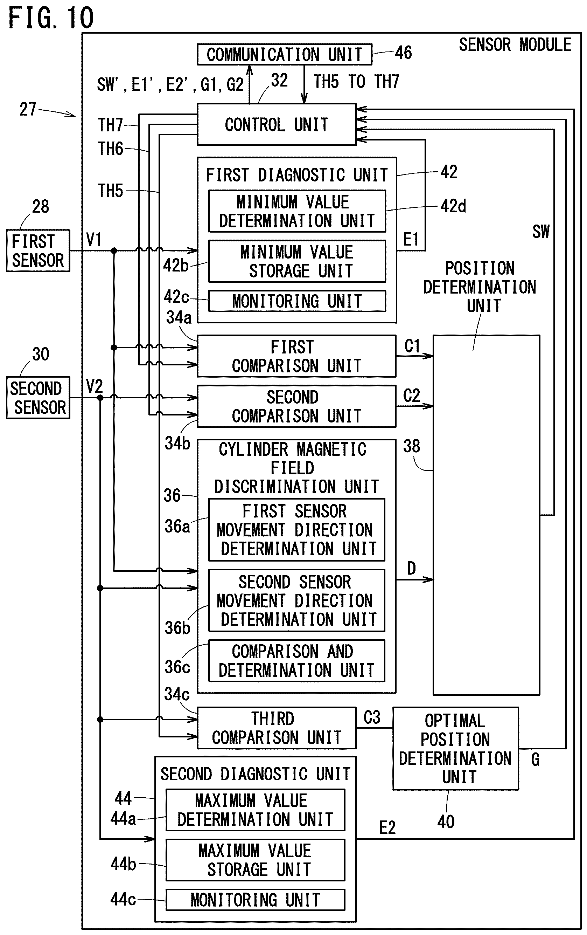

As shown in FIG. 10, the output V1 from the first sensor 28 and the seventh threshold value TH7 from the control unit 32 are input to the first comparison unit 34a. The first comparison unit 34a compares the output V1 of the first sensor 28 with the seventh threshold value TH7, and outputs a comparison signal C1. When the output V1 of the first sensor 28 is less than or equal to the seventh threshold value TH7, the comparison signal C1 is 1, and when the output V1 of the first sensor 28 is greater than the seventh threshold value TH7, the comparison signal C1 is 0.

The output V2 from the second sensor 30 and the sixth threshold value TH6 from the control unit 32 are input to the second comparison unit 34b. The second comparison unit 34b compares the output V2 of the second sensor 30 with the sixth threshold value TH6, and outputs a comparison signal C2. When the output V2 of the second sensor 30 is greater than or equal to the sixth threshold value TH6, the comparison signal C2 is 1, and when the output V2 of the second sensor 30 is less than the sixth threshold value TH6, the comparison signal C2 is 0.

The output V2 from the second sensor 30 and the fifth threshold value TH5 from the control unit 32 are input to the third comparison unit 34c. The third comparison unit 34c compares the output V2 of the second sensor 30 with the fifth threshold value TH5, and outputs a comparison signal C3. When the output V2 of the second sensor 30 is greater than or equal to the fifth threshold value TH5, the comparison signal C3 is 1, and when the output V2 of the second sensor 30 is less than the fifth threshold value TH5, the comparison signal C3 is 0.

The first sensor movement direction determination unit 36a of the cylinder magnetic field discrimination unit 36 determines whether the output V1 of the first sensor 28 has increased or decreased, and transmits the result thereof to the comparison and determination unit 36c. The second sensor movement direction determination unit 36b of the cylinder magnetic field discrimination unit 36 determines whether the output V2 of the second sensor 30 has increased or decreased, and transmits the result thereof to the comparison and determination unit 36c.

The comparison and determination unit 36c compares the movement direction of the output V1 of the first sensor 28 with the movement direction of the output V2 of the second sensor 30, and outputs a determination signal D. When the movement direction of the output V2 of the second sensor 30 is opposite to the movement direction of the output V1 of the first sensor 28, the determination signal D is 1. When the movement direction of the output V2 of the second sensor 30 is not opposite to the movement direction of the output V1 of the first sensor 28, the determination signal D is 0.

The position determination unit 38 has a role of determining whether or not the piston 18 is located within a predetermined range (Xv1 ≤ X ≤ Xv2) that includes an optimal position (Xw1 ≤ X ≤ Xw2). The comparison signal C1, the comparison signal C2, and the determination signal D are input to the position determination unit 38. Based on these signals, the position determination unit 38 outputs a switching signal SW to the control unit 32. When the comparison signal C1, the comparison signal C2, and the determination signal D all have become 1, the position determination unit 38 switches the switching signal SW from OFF to ON. When the determination signal D is 1, and further, at least one of the comparison signal C1 or the comparison signal C2 has become 0, the position determination unit 38 switches the switching signal SW from ON to OFF. When the inequality Xv1 ≤ X ≤ Xv2 is satisfied, the switching signal SW is ON.

When a welding magnetic field is generated, a magnetic flux of the same magnitude and in the same direction acts on the first sensor 28 and the second sensor 30. Since the first sensor 28 and the second sensor 30 are disposed in a manner so as to have output characteristics in the same direction, the movement direction of the output V2 of the second sensor 30 due to the welding magnetic field is the same as the movement direction of the output V1 of the first sensor 28 due to the welding magnetic field. Accordingly, the determination signal D never becomes 1, and a change does not occur in the switching signal SW. More specifically, during a period in which the welding magnetic field is being generated, the switching signal SW does not change.

The optimal position determination unit 40 has a role of determining whether or not the piston 18 is in the optimal position (Xw1 ≤ X ≤ Xw2). The comparison signal C3 is input to the optimal position determination unit 40, and the optimal position determination unit 40 outputs the determination result as an optimal position signal G to the control unit 32. When the comparison signal C3 is 1, the optimal position signal G is 1, and when the comparison signal C3 is 0, the optimal position signal G is 0. When the piston 18 is determined to be in the optimal position, the optimal position signal G is 1.

In response to the switching signal SW having been received from the position determination unit 38, the control unit 32 outputs a signal SW' that is used to control an external device that operates in association with the position detection switch 27. Based on the switching signal SW and the optimal position signal G, the control unit 32 outputs a signal for controlling a non-illustrated operation indicator light. When the switching signal SW is ON, and further, the optimal position signal G is 1, a command signal G1 to illuminate the operation indicator light to be green is output. Therefore, when the inequality Xw1 ≤ X ≤ Xw2 is satisfied, the green operation indicator light is illuminated. When the switching signal SW is ON, and further, the optimal position signal G is 0, a command signal G2 to illuminate the operation indicator light to be red is output. Therefore, when the inequality Xv1 ≤ X < Xw1 or the inequality Xw2 < X ≤ Xv2 is satisfied, the red operation indicator light is illuminated.

The magnet 22 undergoes demagnetization accompanying the passage of time, and further, undergoes demagnetization when placed in a high temperature environment over a prolonged period of time. When such an event occurs, there is a possibility that the minimum value Vmin of the output V1 of the first sensor 28 may increase to such a degree that the minimum value Vmin does not fall below the seventh threshold value TH7. Further, there is a possibility that the maximum value Vmax of the output V2 of the second sensor 30 may decrease to such a degree that the maximum value Vmax does not exceed the fifth threshold value TH5.

The first diagnostic unit 42 is provided for the purpose of monitoring whether or not the minimum value Vmin of the output V1 of the first sensor 28 has increased by a predetermined amount or more due to changes over time or other reasons. Further, the second diagnostic unit 44 is provided for the purpose of monitoring whether or not the maximum value Vmax of the output V2 of the second sensor 30 has decreased by a predetermined amount or more due to changes over time or other reasons. The output V1 of the first sensor 28 is input to the first diagnostic unit 42, and the output V2 of the second sensor 30 is input to the second diagnostic unit 44.

The first diagnostic unit 42 includes the minimum value determination unit 42d, the minimum value storage unit 42e, and the monitoring unit 42c. Each time that the output V1 of the first sensor 28 transitions from a decreasing state to an increasing state, the minimum value determination unit 42d transmits the output at that time to the minimum value storage unit 42e as the minimum value Vmin. The minimum value storage unit 42e stores, in chronological order, minimum value Vmin data received from the minimum value determination unit 42d.

From among a large number of the minimum value Vmin data stored in the minimum value storage unit 42e, the monitoring unit 42c periodically calculates the average value of a most recent predetermined number of data, and compares the calculated value with the average value of an initial predetermined number of data. In the case it is determined that the average value of the most recent predetermined number of data is greater, by a predetermined value or more, than the average value of the initial predetermined number of data, a caution signal E1 is output to the control unit 32.

The second diagnostic unit 44 includes a maximum value determination unit 44a, a maximum value storage unit 44b, and a monitoring unit 44c. Each time that the output V2 of the second sensor 30 transitions from an increasing state to a decreasing state, the maximum value determination unit 44a transmits the output at that time to the maximum value storage unit 44b as the maximum value Vmax. The maximum value storage unit 44b stores, in chronological order, maximum value Vmax data received from the maximum value determination unit 44a.

From among a large number of the maximum value Vmax data stored in the maximum value storage unit 44b, the monitoring unit 44c periodically calculates the average value of a most recent predetermined number of data, and compares the calculated value with the average value of an initial predetermined number of data. In the case it is determined that the average value of the most recent predetermined number of data is smaller, by a predetermined value or more, than the average value of the initial predetermined number of data, a caution signal E2 is output to the control unit 32.

Upon receiving the caution signal E1 from the monitoring unit 42c of the first diagnostic unit 42, the control unit 32 outputs a caution signal E1' to the exterior via the communication unit 46, in order to issue a notification that there is a high probability that demagnetization of the magnet 22 has occurred. Upon receiving the caution signal E2 from the monitoring unit 44c of the second diagnostic unit 44, the control unit 32 outputs a caution signal E2' to the exterior via the communication unit 46, in order to issue a notification that there is a high probability that demagnetization of the magnet 22 has occurred. Consequently, it is possible to prompt the operator to perform maintenance such as replacement of component parts or the like, or to prompt the operator to adjust the fifth threshold value TH5 or the seventh threshold value TH7.

In accordance with the position detection switch 27 according to the present embodiment, the cylinder magnetic field can be distinguished from an external magnetic field such as a welding magnetic field or the like by using the first sensor 28 and the second sensor 30 that sense the magnetic field in only one axial direction.

According to the present embodiment, the first sensor 28 and the second sensor 30 are both disposed in a manner so as to output a positive value with respect to an upward magnetic flux, and to output a negative value with respect to a downward magnetic flux. However, the first sensor 28 and the second sensor 30 may both be disposed in a manner so as to output a negative value with respect to an upward magnetic flux, and to output a positive value with respect to a downward magnetic flux. In that case as well, since the first sensor 28 and the second sensor 30 are disposed in a manner so as to have output characteristics in the same direction, the cylinder magnetic field can be distinguished from an external magnetic field such as a welding magnetic field or the like using the same principle as in the present embodiment.

It should be noted that the present invention is not limited to the above disclosure, and various modifications are possible without departing from the essence and gist of the present invention.

### REFERENCE SIGNS LIST

- 18:: piston
- 22:: magnet
- 25, 26, 27:: position detection switch
- 28:: first sensor
- 30:: second sensor
- 36:: cylinder magnetic field discrimination unit
- 42:: first diagnostic unit (diagnostic unit)
- 44:: second diagnostic unit (diagnostic unit)

## Claims

1. A position detection switch (25, 26, 27) comprising a first sensor (28) and a second sensor (30) each configured to detect a magnetic field of a magnet (22) that is mounted on a piston (18),
wherein the first sensor and the second sensor are magnetic sensors that sense a magnetic field in only one axial direction and output the magnetic field while distinguishing between positive and negative directions of the magnetic field, the magnet is magnetized in a sliding direction of the piston, the first sensor and the second sensor are disposed in a manner so as to sense a magnetic flux perpendicular to the sliding direction of the piston, and the position detection switch comprises a cylinder magnetic field discrimination unit (36) configured to compare a movement direction of an output (V1) of the first sensor with a movement direction of an output (V2) of the second sensor.

2. The position detection switch according to claim 1, wherein
the first sensor and the second sensor are disposed in a manner so as to have output characteristics in opposite directions to each other.

3. The position detection switch according to claim 2, wherein:
the output of the first sensor and the output of the second sensor are compared with a positive threshold value (TH2); a switching signal (SW) is switched from OFF to ON when the movement direction of the output of the second sensor and the movement direction of the output of the first sensor are same, and the output of the first sensor and the output of the second sensor are greater than or equal to the positive threshold value; and the switching signal is switched from ON to OFF when the movement direction of the output of the second sensor and the movement direction of the output of the first sensor are same, and at least one of the output of the first sensor or the output of the second sensor is less than the positive threshold value.

4. The position detection switch according to claim 3, wherein
the output of the first sensor and the output of the second sensor are compared with another positive threshold value (TH1) that is greater than the positive threshold value, and when the output of the first sensor and the output of the second sensor are greater than or equal to the other positive threshold value, the piston is determined to be in an optimal position.

5. The position detection switch according to claim 3, further comprising a diagnostic unit (42, 44) configured to monitor whether or not a maximum value of the output of the first sensor and a maximum value of the output of the second sensor have decreased by a predetermined amount or more.

6. The position detection switch according to claim 2, wherein:
the output of the first sensor and the output of the second sensor are compared with a negative threshold value (TH4); a switching signal is switched from OFF to ON when the movement direction of the output of the second sensor and the movement direction of the output of the first sensor are same, and the output of the first sensor and the output of the second sensor are less than or equal to the negative threshold value; and the switching signal is switched from ON to OFF when the movement direction of the output of the second sensor and the movement direction of the output of the first sensor are same, and at least one of the output of the first sensor or the output of the second sensor is greater than the negative threshold value.

7. The position detection switch according to claim 6, wherein
the output of the first sensor and the output of the second sensor are compared with another negative threshold value (TH3) that is smaller than the negative threshold value, and when the output of the first sensor and the output of the second sensor are less than or equal to the other negative threshold value, the piston is determined to be in an optimal position.

8. The position detection switch according to claim 6, further comprising a diagnostic unit configured to monitor whether or not a minimum value of the output of the first sensor and a minimum value of the output of the second sensor have increased by a predetermined amount or more.

9. The position detection switch according to claim 1, wherein
the first sensor and the second sensor are disposed in a manner so as to have output characteristics in a same direction.

10. The position detection switch according to claim 9, wherein:
the output of the first sensor is compared with a negative threshold value (TH7), and the output of the second sensor is compared with a positive threshold value (TH6); a switching signal is switched from OFF to ON when the movement direction of the output of the second sensor is opposite to the movement direction of the output of the first sensor, the output of the first sensor is less than or equal to the negative threshold value, and the output of the second sensor is greater than or equal to the positive threshold value; and the switching signal is switched from ON to OFF when the movement direction of the output of the second sensor is opposite to the movement direction of the output of the first sensor, and the output of the first sensor is greater than the negative threshold value or the output of the second sensor is less than the positive threshold value.

11. The position detection switch according to claim 10, wherein
the output of the second sensor is compared with another positive threshold value (TH5) that is greater than the positive threshold value, and when the output of the second sensor is greater than or equal to the other positive threshold value, the piston is determined to be in an optimal position.

12. The position detection switch according to claim 10, further comprising a first diagnostic unit (42) configured to monitor whether or not a minimum value of the output of the first sensor has increased by a predetermined amount or more, and a second diagnostic unit (44) configured to monitor whether or not a maximum value of the output of the second sensor has decreased by a predetermined amount or more.
